(19)

Europäisches Patentamt

European Patent Office

Office européen des brevets

(11) EP 3 121 547 A1

(12) EUROPEAN PATENT APPLICATION

(43) Date of publication:
25.01.2017 Bulletin 2017/04

(51) Int Cl.:
F28D 20/00 (2006.01)        F28D 20/02 (2006.01)

(21) Application number: 15177878.4

(22) Date of filing: 22.07.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(71) Applicant: ETH Zurich
8092 Zurich (CH)

(72) Inventors:
• STEINFELD, Aldo
  5200 Brugg (CH)
• JOVANOVIC, Zoran
  8134 Adliswil (CH)
• HASELBACHER, Andreas
  8127 Forch (CH)
• STRÖHLE, Stefan
  5400 Baden (CH)

Remarks:
Claims 16-18 are deemed to be abandoned due to non-payment of the claims fees (Rule 45(3) EPC).

(54) **SYSTEM AND METHOD FOR STORING AND RELEASING HEAT**

(57) The present invention relates to a thermal storage system (10) comprising at least two heat storage modules (1, 2, 3), wherein at least one of the heat storage modules is at least one thermochemical storage module (2), which is spatially separated from the at least one further heat storage module (1, 2, 3), wherein the at least two heat storage modules (1, 2, 3) are provided in series such that each heat storage module (1, 2, 3) is passed by the at least one heat transfer fluid. The invention also relates to a method for storing heat and releasing heat using said storage system.

**Fig. 2C**

**Description**

The invention relates to a thermal storage system according to claim 1, a method for storing heat according to claim 13 and a method for releasing stored heat according to claim 16.

**Description**

Amongst the presently used renewable energy systems the use of solar energy in concentrated solar thermal power (CSP) plants is promising, since it has in general the potential to be operated at high energy conversion efficiencies at relatively low costs. CSP plants concentrate direct solar radiation to heat a fluid (called the heat transfer fluid HTF) which is then typically used to produce steam and to heat said steam or vapor or another working fluid. The working fluid runs an engine such as a steam engine connected to a generator for producing electricity. These CSP plants are implementing either parabolic troughs, dishes, or power towers. The temperature of the working fluid in a solar thermal power plant can typically run up to several hundred degree Celsius and thus an energy efficiency when converting solar energy to electricity exceeding 20 % can be achieved by using the CSP technology.

An important advantage of the CSP technology is that it can easily be coupled with thermal energy storage (TES) systems. Said TES systems allow for reducing the mismatch between energy supply by the sun and electricity demand. Depending on variation in solar insolation throughout the day and year the TES system can be integrated to perform buffering of the energy supply, for instance during cloud cover or bad weather, that can improve the dispatchability of a plant by collecting energy from the solar field during off-peak hours and then discharging energy during peak hours of demand, and therefore improve the overall annual capacity factor. A TES system can allow a plant to run when the sun is not available and, if large enough, can enable the power plant to operate even for 24 hours. As compared to storing in batteries the electricity produced via photovoltaic (PV) panels, for example, it is presently significantly less expensive to store thermal energy in a TES that is integrated into a CSP plant.

As TES solutions may alleviate the key constraints for cost-effective utilization of solar energy and power generation, various TES concepts have been considered and evaluated at different stages of development. In general, there are three TES concepts which are classified as sensible heat storage (SHS), latent heat storage (LHS) and thermochemical storage (TCS).

SHS systems achieve storage by raising the temperature of a storage material, usually a solid or liquid that undergoes neither chemical transformation nor phase transition. The storage of sensible heat in such a material depends strongly on its heat capacity, which determines the energy density and the thermal diffusivity. The amount of energy stored is given by the following equation

$$Q = m_{SHS}C_P\Delta T$$

where Q is the energy stored, $m_{SHS}$ is the mass of the SHS material or medium, $C_P$ is the mean specific heat of the material for the temperature change during the process $\Delta T$. Potential solid SHS materials are for instance rock, concrete, ceramics, sand, or metals. The most presently used liquid SHS material comprises synthetic oils and molten salts.

In a LHS system the additional heat is stored as the enthalpy of phase transition of the storage material. Thus, these systems utilize materials that change phase at high temperatures, such in case of solid-liquid or liquid-gas transitions. The energy stored in mass $m_{LHS}$ for a solid-liquid transition in a phase change material (PCM) is

$$Q = m_{LHS} [C_{PS}(T_M\text{-}T_S)+h+C_{PL}(T_L\text{-}T_M)],$$

where $m_{LHS}$ is the mass of the LHS material or medium, $C_{PS}$ and $C_{PL}$ are the mean specific heat capacities of the solid and liquid phases, respectively, h is the enthalpy of the phase change, $T_M$ is the melting temperature, $T_S$ is the temperature of the solids at the end of discharging, and $T_L$ is the temperature of the liquid at the end of charging.

The TCS system uses the heat from a heat source such as the solar field to drive reversible chemical reactions. Hereby, the reaction in the forward direction is the endothermic reaction (taking up the heat) while the reverse reaction is exothermic (releasing heat). The amount of heat stored in a chemical reaction depends on the heat of reaction and the extent of conversion given by

$$Q = a_r m_{TCS}\Delta H,$$

where $a_r$ is a fraction of the key reactant reacted, $m_{TCS}$ is the mass of the key reactant and $\Delta H$ is the heat of the reaction per unit mass of the key reactant. Thus, in a TCS the heat is looped via reversible chemical reactions: It is stored as the enthalpy of the endothermic reaction and recovered as sensible heat through the exothermic recombination of the reactants.

Typical chemical reactions for TCS comprise manganese oxide (6 $Mn_2O_3 \leftrightarrow$ 4 $Mn_3O_4 + O_2$ or 2 $Mn_3O_4 \leftrightarrow$ 6 $MnO + O_2$), cobalt oxide (2 $Co_3O_4 \leftrightarrow$ 6 $CoO + O_2$), calcium hydroxide ($Ca(OH)_2 \leftrightarrow CaO + H_2O$), calcium carbonate ($CaCO_3 \leftrightarrow CaO + CO_2$), magnesium hydride ($MgH_2 \leftrightarrow Mg + H_2$), magnesium oxide ($Mg(OH)_2 \leftrightarrow MgO + H_2O$), iron carbonate ($FeCO_3 \leftrightarrow FeO + CO_2$), ammonia ($NH_3 \leftrightarrow$ 0.5 $N_2$ + 1.5 $H_2$) and others (See for an overview Kuravi et al, Progress in Energy and Combustion Science, 49, 2013, pages 285 to 329). Alternatively, non-stoichiometric reactions of metal-oxides such as perovskites ($ABO_3 \leftrightarrow ABO_{3-\delta} + (\delta/2)O_2(gas)$) could be employed. Furthermore, sorption processes typically involving metal salts and water, ammonia, methanol or methyl-ammonia, or metal alloys and hydrogen, could be employed for TCS (See for an overview Cot-Gores et al., Renewable and Sustainable Energy Reviews, 16, 2012, pages 5207-5224).

Current state of the art TES for CSP plants are based on active two-tank SHS systems in which the storage medium is circulated through a heat exchanger to accept or reject heat and the cold and hot storage materials are stored in separate tanks. In one approach the storage medium (e.g. thermal oil) serves also as the HTF that circulates through the solar field, therefore, a fraction of the HTF leaving the solar field can be directed to the hot tank during high irradiation periods. When the solar irradiation is insufficient to drive the power block, the HTF can be transferred from the hot tank to the power block and finally back into the cold tank.

To reduce costs, it has been suggested to use molten salt as storage medium that exchanges heat with a separate HTF. In that case, the molten salt is taken from the cold tank, heated by the HTF in a heat exchanger and directed to the hot tank during charging. For discharging, the process is reversed, accordingly. Such two-tank molten salt storage systems allow for maintaining almost constant outflow temperature if the storage tanks are well insulated. However, the two-tank molten salt systems suffer from several drawbacks such as (a) the operation temperature range of the molten salt is limited, (b) the costs of the salt are relatively high, amounting up to 50 % of the total costs of the store system and (c) the equipment costs are high, since the construction of two separate tanks and an additional heat exchanger is required.

To avoid the need for building two separate tanks, active single tank systems have been proposed in which the hot and cold fluid zones are separated by buoyancy or a moving plate. However, the fluids employed as storage medium still suffer from temperature limitations, moderate energy storage densities, and high material costs. Alternatively, steam accumulators have been proposed, in particular, for direct steam generation CSP plants. However, the energy storage density achieved in this way is rather low, the construction of the high pressure containers is expensive, and the production of saturated steam is accompanied with a decrease in pressure during the discharging.

In passive systems, also called regenerators, a HTF is brought into contact with the storage material that remains in the same enclosure. Passive systems with sensible and/or latent heat storage have been realized mostly at the lab or pilot scale. Sensible heat regenerators offer the potential of employing low cost storage material such as rocks or industrial waste slags that can operate over a wide temperature range. However, the outflow temperatures of such SHS systems generally start to decrease with time at some instant during discharging as well as increase with time at some instant during charging.

By combining a packed bed of SHS material with a layer of a LHS material, the outflow temperature can be stabilized during discharging at temperatures where the PCM solidifies (Zanganeh et al., Applied Thermal Engineering, 2014, 70 (1), pages 316 to 320). However, to transfer the heat required for the melting of the PCM, the HTF inflow temperature during charging must inherently be higher than the melting temperature and thus also higher than the solidification temperature of the PCM. Accordingly, the outflow temperature during discharging of a combined sensible/latent heat regenerator can be stabilized only at temperatures that are lower than the inflow temperature during charging.

The research and industrial application of TCS systems is at an early stage. The performance of packed and fluidized beds with direct contact of the HTF and the solid reactants has been investigated at laboratory scale (Schaube et al., Journal of Solar Energy Engineering, 2011, 133, 031006 and Álvarez et al., Energy Procedia, 2014, 49, 676-683). These concepts have the potential to reach increased energy storage densities as compared to existing TES and cover temperature ranges exceeding 1000°C. However, because the HTF serves as carrier of both heat and gas reactant, the independent adjustment of the reactant partial pressure would require mixing of those with inert gases. The costs associated with providing inert gases and flowing those through the TCS may be the reason why no such concept has been proposed so far in which the outflow temperatures are directly controlled by adjustment of the gas reactant pressure.

An approach to solve that problem is described in WO 2011/0546 A1. Here, it is proposed instead of providing a direct contact of the HTF with the solid reactants to physically separate the HTF from the solid and gas reactants. However, this approach does not attempt to maintain a constant outflow temperature during the entire charging and discharging processes.

Thus, there is still a need to improve the TES solutions for making CSP plants economically more competitive. This objective is achieved by a TES system according to claim 1, a method for storing the heat according to claim 14 and a method for releasing heat according to claim 17.

Accordingly, the TES system, which may be coupled to a CSP plant, an advanced adiabatic compressed air energy storage (AA-CAES) plant, or any source of industrial waste/process heat, comprises

- at least two heat storage modules,
- wherein at least one of the heat storage modules is at least one TCS module, which is spatially separated from the at least one further heat storage module, and
- wherein the at least two heat storage modules are provided in series such that each heat storage module is passed by at least one HTF.

Thus, at least two heat storage modules are contacted by at least one HTF, in particular the same HTF.

A TES system in the form of a combined system of at least two heat storage modules is provided, namely, a combination of a TCS module with at least one further heat storage module, in particular at least one SHS module and/or at least one LHS module and/or at least one TCS module. The use of multiple types of heat storage concepts has several benefits. It is for instance desirable to minimize the temperature difference between the storage medium and the working fluid in a traditional superheated steam power cycle in order to reduce exergy losses. During the phase change of the working fluid, in this case the steam generation, its temperature remains basically constant. Therefore, it can be beneficial in terms of exergy efficiency to provide a section within the TES where heat is released at constant temperature. In that case, the temperature difference between the evaporating HTF and the storage material can be kept constant along the storage axis. The present TES system allows for establishing desired axial temperature profiles by combining, for example, one or more SHS modules for water preheating, one or more isothermal TCS modules for evaporation, and one or more additional SHS and/or TCS modules for superheating the steam.

The combined TES system according to the invention provides multiple advantages, in particular, when coupling the TES system to a CSP plant. The present system provides an increased energy storage density, thereby reducing the costs of both the storage material and the storage enclosure. Furthermore, a constant outflow temperature of the HTF during discharging is provided thereby avoiding both thermal stresses and a drop in the thermal-to-electricity efficiency of the power block. Also, a constant outflow temperature during charging can be obtained and kept below the limit imposed by the operating constraints of the HTF pump(s) and/or materials of construction of the solar receiver. In addition, the said system can be operated at temperatures of up to 1800 °C allowing for reaching higher thermal-to-electricity efficiencies in prospective CSP plants based on combined cycles. Further advantages of the present system will become apparent in the following.

In an embodiment of the present TES system the at least two heat storage modules are situated in a single enclosure, in particular in one container. It is particularly preferred that the at least one TCS module is arranged at any position along the axial direction of the one enclosure or container with respect to the direction of the flow of HTF. Such an arrangement allows for a compact construction of the TES system which in turn reduces overall construction costs and material costs.

It is, however, also possible and conceivable to provide each of the at least two heat storage modules in at least two separate enclosures, in particular separate containers, that are connected in series. In this variant the TES system comprises at least two separate enclosures connected in series. The system can be used for instance in conjunction with large-scale CSP plants providing high efficiency heat storage.

In a further variant, two or more, preferably 3 to 20, most preferably 4 to 15 TCS modules comprising the TCS material are provided. In case the modules are arranged in one enclosure or container said TCS modules are arranged along the axis of the enclosure or container; thus at specific axial locations with respect to the direction of HTF flow. The axial locations of the modules are chosen to have a beneficial effect on the axial temperature profile in the TES system and the temperatures at the hot and cold ends of the TES system during discharging and charging, respectively.

In another variant of the present TES system, the at least one TCS module comprises at least one compartment, in particular a compartment containing at least one TCS material. Said compartment may be constructed in form of a tube. Each TCS module may be comprised of multiple compartments, potentially a tube bundle, in particular a metal tube bundle. Such a tube bundle may cover the whole cross section of the enclosure, in particular if the TCS module and the further heat storage module(s) are arranged in a single enclosure. To suppress potential deviations from plug flow behavior, i.e., to suppress non-uniform temperature distributions along the cross section of the enclosure or container, it may also be conceivable that the TCS module covers only a specific part of the cross section of the enclosure or container, in particular in case the compartments of the TCS module are arranged at any location along the axis of the enclosure or container. Another variant for suppressing deviations from plug flow behavior is to operate different compartments that are located at different radial positions within the TCS module at different temperatures.

The TCS module is preferably arranged perpendicularly with respect to the flow direction of the HTF. For instance, when using a tube bundle to contain the TCS material the axes of the tubes in said tube bundle are arranged so they are perpendicular to the flow direction of the HTF.

The at least one TCS module may be operated batch-like or in a continuous manner.

As mentioned above the TCS compartment may be constructed to be tube-like. However, also other compartment designs are conceivable, such as rectangular or box-like.

Different compartment configurations of the thermochemical storage module are possible. In one variant the TCS compartment, such as a tube, is completely filled with a packed bed of TCS material. This provides the maximum possible effective heat storage density for a given TCS material. Since the gas reactant needs to travel through the bed of solid reactants along the entire tube length L, this configuration leads to the maximum possible pressure drop.

In a further variant the TCS compartment, such as a tube, is partially filled with TCS material. Here the travel distance of the gas reactant through the bed is reduced to about the tube diameter D. If tube length L/ tube diameter D is >>1, the pressure drop of a partially filled tube is significantly lower as compared to a completely filled tube.

In yet another variant the TCS compartment, such as a tube, is formed as an annulus-type tube with the inner annular wall being porous or perforated hence permeable to the gaseous reactants/products. In this variant the outer tube is non gas-permeable. Here the TCS material is arranged as a mantle around a porous or perforated central tube. The gaseous reactants/products are fed/evacuated through the porous/perforated wall of the central tube. In such a configuration the travel distance of the gas reactant through the bed is reduced to the order of the tube diameter D. Furthermore, as compared to feeding/evacuating the gas reactant/product through the plain tubular reactor having the length L containing the same volume/amount of the same solid TCS material as the annular tubular reactor having the same length *L* and inner and outer diameters *d* and *D*, respectively, for the same flow rate of the gas reactant/product the superficial velocity at the inner porous or perforated annular tube scales with the superficial velocity through the said plain tube as

$$\frac{1}{4}\frac{\left(\dfrac{D}{d}\right)^2 - 1}{\dfrac{L}{d}}$$

Therefore, for *D / d* = 4 and *L / d* = 100 the superficial velocity at the porous or perforated inner tube of the annular TCS reactor is less than 4 % of the superficial velocity through the plain tubular reactor containing the same amount of the same TCS material. According to Ergun's equation (Ergun, S., Chemical Engineering Progress, 1952, 48 (2), pages 98 to 94) such a decrease in superficial velocity should result in substantial decrease in the pressure gradient through the TCS material arranged in the mantle of the said annular TCS tubular reactor.

In another embodiment, more than one porous or perforated tube are situated within a single TCS compartment filled with the TCS material. These tubes are free of the TCS material and used to feed/evacuate the gaseous reactants/products to/from the TCS material surrounding said tubes at controlled superficial velocity. The TCS compartment may be provided in the form of a tube having gas-impermeable wall thus the axis of the outer gas-impermeable tube and the axes of inner porous or perforated tubes are parallel to each other.

It is also conceivable that the TCS compartment is provided as a set of coaxial tubes whereby the outer tube has gas-impermeable wall and more than one inner tubes have porous or perforated walls whereby at least a portion of at least one inner tube is free of the TCS material thus used to deliver/evacuate the gaseous reactant(s)/product(s) to the TCS material.

Other non-tubular variants of delivering/evacuating the gaseous reactant(s)/product(s) at an appropriate superficial velocity to the TCS material through porous or perforated walls within a non-tubular TCS compartment are also possible.

In still a further variant the TCS compartment is provided as a tube with internal elements for heat transfer and gas-solid contacting enhancements. Such internal elements may include fins to enhance radial heat transfer from TCS material to tube walls and vice versa, as well as contacting between the gaseous reactant and the TCS material.

It is also possible to provide the TCS compartment as a container or tube filled with a mixture of TCS material and inert solids. This reduces potential sintering of the TCS material, thus improves mass transfer to the TCS material. It is to be understood that any of the configurations described above can be combined.

In another preferred embodiment, the TCS compartment may be in form of a container or tube filled with structured packings, such as honeycombs, monoliths, foams. This provides improved access of the gas to the TCS material even if sintering is an issue. Such packing may consist of TCS material itself, or of an inert material that is coated with the TCS material. In case the packing or support structure consists of a thermally highly conductive material, heat transfer from the TCS material to the compartment walls and vice versa may be enhanced.

In another variant of the present TES system that in case there are only TCS modules provided within the system each module comprises a different type of TCS material. It is also possible that each TCS module comprises the same type of TCS material but is operated at different gas pressures. A combination of both of these variants is of course also possible.

In another variant of the present TES system, the pressure in the at least one module, in particular compartment, preferably multiple compartments containing the at least one TCS material is independently controlled. Each one of the compartments may be connected to at least one storage tank, preferably at least one gas storage tank for the reaction partner released in the course of the endothermic reaction of the TCS material. The inflow and outflow of the gas from the storage tank into each of the compartments of the TCS module is independently controlled by suitable compressors and valves.

A suitable homogeneous or heterogeneous reaction system, or a sorption process, can be defined as TCS system. The TCS material can be described as at least one of at least two compounds that convert into each other via a reversible chemical reaction having non-zero reaction enthalpy. Thus, at least one of the said conversions is an endothermic reaction and at least one of the other conversions is an exothermic reaction. Along the course of the at least one endothermic reaction a gas is preferably released. The TCS material may thus also be described as a reaction pair of reaction partners.

A TCS material suitable for the use in the present invention is the manganese oxide system comprising $Mn_2O_3$ / $Mn_3O_4$ reaction pair as the TCS material undergoing the reversible reaction according to the equation

$$6\ Mn_2O_3 + \Delta H \leftrightarrow 4\ Mn_3O_4 + O_2$$

Another possible TCS media in the present case is the use of calcium carbonate which undergoes the following reaction

$$CaCO_3 + \Delta H \leftrightarrow CaO + CO_2.$$

It is also referred to the previously described TCS media.

In an embodiment of the TES system the at least one other heat storage module is at least one SHS module, at least one TCS module and/or at least one LHS module.

Thus, there are several arrangements conceivable. In one possible arrangement at least one, preferably at least two, three, four or more TCS modules and at least one SHS module are linked.

In such a case the at least one TCS module in form of the at least one TCS compartment containing the at least one TCS material may be arranged on top or at the bottom of the at least one SHS module with respect to the direction of HTF flow. It is also conceivable that the TCS module is arranged at any location in between of two SHS modules. The later variant, however, is preferably applicable for the arrangement of such modules within a single enclosure.

Accordingly, the TCS module can be arranged near the hot end of the SHS module, near the cold end of the SHS module, and/or at any location between either ends. One variant is arranging the TCS module at the hot end of the SHS module. Thus the at least one TCS module may be arranged spatially separated on top of a SHS module.

Another possible variant is that at least one TCS module comprising the TCS material is arranged at the hot end and at least another TCS module comprising the TCS material is arranged at the cold end of the SHS module.

In a further embodiment of the present TES system the one or more enclosures containing the at least two heat storage modules are arranged in any orientation, in particular vertically or horizontally. A vertical arrangement of the enclosure(s) is however preferred due to the advantage of exploiting the buoyancy effects in the HTF.

In another embodiment of the present TES system the at least one SHS module comprising at least one SHS material is constructed in way of a passive heat storage system. In a passive storage system the HTF carries energy received from a heat source to the storage medium during charging and receives the energy from the storage system when discharging.

In the present case the SHS module is preferably provided in form of a packed bed system, preferably comprising rocks, sand, metals, slags, or concrete. Such packed bed systems may consist of storage material elements in various shapes and sizes. The HTF flows between said elements for transferring the heat to the storage material. Since the HTF is in direct contact with the storage material, the heat transfer coefficients can be large. The advantage of such systems is their lower cost compared to two-tank TES units.

It is, however, also conceivable to provide the SHS module in form of a system with embedded or enhanced heat transfer structures. In such a case, the HTF flows through specific heat transfer structures like tubes, shells, flat plates, honeycombs, or monoliths.

In another variant, it is possible to combine at least one, preferably at least two, three or more TCS modules, at least one SHS module and at least one LHS module. The thermochemical storage module and the latent heat storage module are thereby enclosed in separate enclosures. The TCS module may comprise one or more compartments or tubes that are filled with the suitable TCS material participating in reversible homogeneous or heterogeneous chemical reactions by conveying the reactants through the TCS compartment.;

The LHS module comprises at least one compartment, in particular an encapsulation, housing a PCM. For example, the LHS compartment may consist of a spherical or tubular encapsulation housing the LHS material. A LHS module may comprise one or more compartments such as a packed bed of spherically encapsulated PCM or a bundle of tubes that are filled with PCM. These types of latent heat TES system have been studied in detail. The TCS modules and optionally the LHS modules may be conveniently distributed within SHS modules, for example comprised of packed beds.

The HTF exchanges heat, which originates for instance from a CSP plant, with the SHS medium directly and with the TCS medium and LHS medium indirectly through the walls of the respective compartments. The HTF used in the present system may be selected from a group comprising organic oil, nitrate salts or other molten salts, air, steam (superheated or supercritical), $CO_2$ (supercritical), liquid metals, nano-scale encapsulated structures suspended in fluids and dense suspensions of solid particles. The most preferred HTFs are air or steam.

As described, the present TES system may be coupled to a CSP plant. In particular, three subsystems of solar field, TES system and power block may be operated with individual HTFs for each of the three subsystems that are coupled through heat exchangers. Thus, in one variant a first HTF coming from the solar field may not be directly fed into the TES system, but rather is fed to a first heat exchanger for heating a second HTF which in turn is fed to the present TES system. The heated second HTF stores the heat in the present TES system as describe above in a charging process. For discharging or releasing heat from the present TES system the second HTF is heated and enters the heat exchanger where the released heat is transferred from the second HTF to another HTF which in turn provides the heat via a further heat exchanger to a power block, for example for generating electricity.

The present TES system may be used in a method for storing heat, wherein the method comprises the steps of

- guiding a flow of at least one HTF with a defined inflow temperature $T_{HTF/in}$ (charge) through the TES system, wherein the HTF passes the at least two heat storage modules, wherein at least one of the heat storage modules is at least one TCS module, which is spatially separated from the at least one further heat storage module,
- whereby the HTF transfers at least part of its heat to the at least two heat storage modules, and
- the HTF leaves the TES system with an outflow temperature $T_{HTF/out}$ (charge) that is lower than the inflow temperature $T_{HTF/in}$ (charge).

In the present method for storing heat, the heat of the HTF is transferred or charged to the storage material within the present TES system in multiple ways.

In one embodiment the HTF transfers at least a part of its heat to the TCS module comprising the TCS material, whereby the TCS material undergoes an endothermic reversible chemical reaction.

When the HTF is contacting the TCS module(s) comprising at least one compartment with the TCS material the heat is indirectly transferred through the walls of the respective compartments. Hereby, the transferred heat promotes an endothermic reversible chemical reaction, for example a thermal decomposition of the storage material within the compartment, whereby two educts, preferably one in a gaseous form are obtained. Thus, the endothermic reversible chemical reaction of the TCS material provides at least one $gas_{out}$, which is subsequently at least partially removed from the compartment, and for example subsequently stored in a storage tank or transferred somewhere else. The rate of the endothermic reaction of the TCS material is preferably accelerated and the equilibrium temperature of the said reversible endothermic reaction is preferably decreased by reducing the pressure of the released gas in the TCS compartments by evacuating the gas and directing it into the storage tank or somewhere else using for instance an external vacuum pump.

The temperatures required for the endothermic reaction depend on the TCS material used and can vary in ranges between 200 and 1500 °C, preferably 300 to 1200 °C, most preferably between 500 and 800°C. This requires that the HTF in the charging process has an inflow temperature which is high enough for promoting the endothermic reaction of the TCS material. Thus, for instance, in case manganese oxide is used as TCS material the HTF should have a temperature of about 900 °C in order to promote the endothermic reduction at a temperature of about 800 °C.

In case the at least one other heat storage module is a SHS module the HTF exchanges the heat directly with the SHS material by flowing through the packed bed system of the SHS material. For example, the HTF, which may be in form of a synthetic oil, molten salt, air or water steam, is guided through a packed system of rocks or concrete and is thereby in a direct contact to the SHS material. It also may be possible that the HTF exchanges the heat indirectly with the SHS material in case the SHS module is provided in form of a concrete block with immersed tubes through which the HTF flows.

In case the at least one other heat storage module is a LHS module the HTF transfers at least part of the heat through the walls of the one or more respective PCM compartment(s) promoting the phase change of the PCM material within said compartment(s).

The inflow temperature $T_{HTF/in}$ (charge) of the HTF (at the "hot" end of the TES system) is dictated by the solar field outlet temperature. This temperature needs to be in accordance with the requirements of the applied power cycle. Current state-of-the-art CSP plants mostly operate with trough receivers, whereas central receiver (tower) systems are emerging. Typically this temperature may be in a range between 500 and 1500°C, preferably between 700 and 1300°C, in particular preferably between 600 and 1000°C.

It is furthermore a method provided for releasing the heat stored in the TES system which comprises the steps of

- guiding a flow of at least one HTF with an inflow temperature $T_{HTF/in}$ (discharge) through the TES system, wherein the HTF passes the at least two heat storage modules, wherein at least one of the heat storage modules is at least one TCS module, which is spatially separated from the at least one further heat storage module,
- whereby at least part of the heat stored in the at least two heat storage modules is transferred to the HTF, and
- whereby the HTF leaves the TES system with an outflow temperature $T_{HTF/out}$ (discharge) that is higher than the inflow temperature $T_{HTF/in}$ (discharge).

Thus, the steps required for releasing the stored heat in the TES system follow the opposite steps taken for storing the heat.

During the discharging process the inflow temperature $T_{HTF/in}$ (discharge) of the HTF (i.e. at the "cold" end of the TES system) is dictated by the HTF leaving the power block. This normally depends on the type of condenser that is employed in the Rankine-steam cycle. For air-cooled and water-cooled condensers, the outlet temperatures (thus inflow temperature $T_{HTF/in}$ (discharge)) are typically around 300°C and 100°C, respectively.

The TCS material in the at least one TCS module undergoes an exothermic reversible chemical reaction, whereby at least part of the heat released during said exothermic reaction is transferred to the HTF. Thus, the heat or enthalpy stored by the TCS material in the TCS module is released in an exothermic reaction and is indirectly transferred through the walls of the respective compartment, at least partially to the HTF. In the course of the exothermic reversible chemical reaction, the gas released as a product of the endothermic reaction and, for example, stored in the respective storage tank is transferred back into the TCS compartment whereby the pressure in the compartment is increased thereby promoting a shift of the chemical equilibrium towards the less energetic status of the TCS material whereby at least part of the previously stored heat is released and transferred to the HTF passing through the TES system. Thus, the exothermic reversible chemical reaction of the TCS material is controlled by feeding at least one gas$_{in}$ to the at least one compartment.

The gaseous reactant participating in the exothermic reaction with the TCS material may be as mentioned above taken from a storage container, but can also stem from a plant or may be ambient gas, such as ambient air.

The change in the reaction pressure within the TCS compartments is thus reflected by the corresponding change in the equilibrium temperature of a reversible chemical reaction of the TCS material. For example, by adjusting the pressure of the single gas reacting in a single reversible reaction with a suitable single solid component within the TCS compartments to produce another solid component according to the phase rule sets the equilibrium temperature of the system to

$$F = C(3) - P(3) + 2 - r(1) = 1$$

As the reaction rates of the reversible chemical reactions increase with the departure from the equilibrium, by varying the system pressure it is therefore possible to tune both the temperatures at which the exothermic / endothermic reactions proceed as well as the rates at which those reactions release or capture heat. In addition, the rates of exothermic/endothermic non-catalytic gas-solid reactions generally increase/decrease with the partial pressure of the gaseous reactants. As a result, the HTF flowing past and exchanging heat with the TCS compartment may be heated or cooled to a desired temperature and at desired rate.

Thus, by reducing and/or increasing the gas pressure within each of the compartments comprising the TCS material it is possible to adjust the temperature and rate at which the reaction proceeds, and therefore tune the heat transfer rates between the HTF and the TCS modules within the present TES system.

The partial pressure of the gaseous reactants within the TCS compartments may be achieved via either a) adjusting the total gas pressure via a vacuum pump or compression device or b) diluting the said gas reactants with an inert gas. The gas reactants and/or the inert gases may be taken a) from the ambient and/or b) from one or more containers and/or c) from the plant in which the TES system is integrated. Following the reaction the gaseous products could be stored in one or more containers for later use and/or released to the ambient and/or supplied to the plant in which the TES system is integrated.

In case the at least one further heat storage module is a SHS module, the heat stored in the SHS material is transferred therefrom or taken up through a direct contact of the HTF with the SHS material.

The idea of the present invention to incorporate one or several TCS compartments operating within defined temperature ranges at specific axial locations within the TES enclosure(s) with respect to the flow direction of the HTF, in particular in combination with a SHS module offers the following advantages.

Stable HTF outflow temperature during discharging:

By inserting a TCS module at the hot end of the SHS module and appropriate adjustment of the gas reactant pressure in the TCS compartment(s) during discharging the HTF fluid can continuously be heated to a temperature equal to the HTF inflow temperature during charging. This implies that the power block can be operated at the same temperature during both high insolation periods, when heat is transferred from the solar field to the power block and periods of insufficient insolation when heat is transferred from the TES system to the power block.

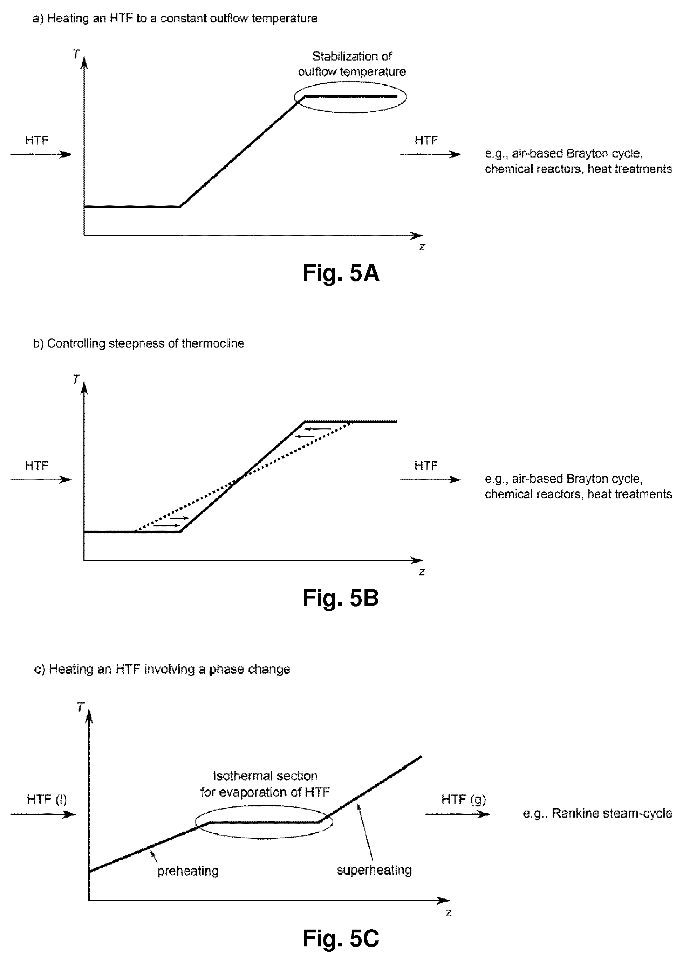

Furthermore, the present TES system allows for providing an HTF outflow temperature during discharging that is higher than the inflow temperature during charging. By increasing the gas pressure in the TCS compartments during the exothermic reaction (discharging) it is possible to establish an HTF outflow temperature during discharging that is higher than the HTF inflow temperature during charging. This could allow for a compensation of heat losses in piping or heat exchangers downstream or increasing the efficiency of the downstream process where the stored heat is utilized. This effect is depicted in the diagram of Fig. 5a.

Stable HTF outflow temperature during charging:

In previously suggested concepts of sensible or latent heat passive TES systems the HTF outflow temperature during charging begins to increase once the thermocline reaches the cold end of the TES system. By adjusting the gas reactant pressure in a TCS compartment located at the cold end of the regenerator or TES system during charging, the HTF at the outlet can continuously be kept at a temperature equal to the HTF inflow temperature during discharging. Accordingly, the HTF leaving the TES system during charging is maintained at a constant temperature and can therefore be continuously recirculated to the HTF pump without exceeding the temperature limitations.

Increased heat storage density:

The steepness of the thermocline within the regenerator, i.e., the steepness of the axial thermal gradient in the TES material with respect to the HTF flow direction, has a direct impact on the storage density. The steeper the thermocline, the more heat can be charged before the HTF outflow temperature reaches the upper limit that is imposed by the downstream equipment. The present concept allows for tuning the steepness of the thermocline by employing multiple TCS modules distributed along the axis of the enclosure, each operating at different temperatures that are controlled independently by individual adjustment of the gas reactant pressures in the TCS compartments of the said TCS modules. The endothermic reactions in the TCS compartments during charging provide additional heat sink for the HTF fed through the TES system, thereby resulting in steeper thermoclines and thus higher volumetric and gravimetric heat storage densities. This effect is schematically depicted in the diagram of Fig. 5B.

Low mechanical loads on the TCS solids:

In case of the TCS compartments housing gas solid reactions, the compartment walls act as a mechanical support. Therefore, the mechanical loads on the TCS material may be kept low because the material is not subjected to the weight of the entire storage material located on top of them.

Flexible solid particle reactant size for TCS packed bed compartments:

When heat transfer to or from reacting solids, thus temperature uniformity within a reactor is not an issue, a packed bed is the preferred configuration for gas-solid reactors as it requires no movement and/or circulation of solids. However, this type of contacting gases with solids is accompanied with a pressure drop of the gas that increases with an increase in the superficial gas velocity and/or a decrease in the size of the solids. In case of an excessive pressure drop, the gas starts channeling through the bed thus bypassing the solids and decreasing contacting efficiency. For this reason, industrial packed beds operate exclusively with larger solid particles, generally larger than a few millimeters.

As the gas in the TCS compartments does not have any role as HTF, the only requirement for setting the gas flow rates through the TCS compartments is imposed by the reaction rates and desired set-point pressures that determine the desired operating equilibrium temperatures in the compartments. These flow rates are generally low. Therefore, by adjusting the cross section area through which a gaseous reactant is delivered to or evacuated from the TCS compartments those could be operated as packed beds at gas superficial velocities that are low enough to allow for a permissive pressure drop even if solids are in the form of sub-millimeter particles. This can be advantageous, for example, to hydrate calcium oxide powder, which cannot be shaped to thermo-mechanically stable larger pellets or granules due to the significant volume change during the reaction. In particular, such a volume expansion of the solids due to reaction does not introduce any complications if the TCS compartments are filled only partially.

Fast mass transfer to surface of TCS material:

If the gas atmosphere within the TCS compartments is composed of the gaseous reactant only, multi-component gas diffusion can be avoided. Accordingly, the external transport of the gas reactant onto or from the surface of solid / liquid reactants is driven by local pressure variations and therefore fast.

Further details of the invention are explained in the following by means of the Figures with reference to exemplary embodiments. It shows:

Figure 1A      a schematic side view of a first embodiment of the TES system according to the invention;
Figure 1B      a schematic side view of a second embodiment of the TES system according to the invention;
Figure 1C      a schematic side view of a third embodiment of the TES system according to the invention;
Figure 1D      a schematic side view of a fourth embodiment of the TES system according to the invention;
Figure 1E      a schematic side view of a fifth embodiment of the TES system according to the invention;
Figure 2A      a schematic side view of a sixth embodiment of the TES system according to the invention;
Figure 2B      a schematic side view of a seventh embodiment of the TES system according to the invention;
Figure 2C      a schematic side view of a eighth embodiment of the TES system according to the invention;
Figure 2D      a schematic side view of an ninth embodiment of the TES system according to the invention;
Figure 2E      a schematic side view of a tenth embodiment of the TES system according to the invention;
Figure 3A      a first embodiment of a TCS compartment,
Figure 3B      a second embodiment of a TCS compartment;
Figure 3C      a third embodiment of a TCS compartment;
Figure 3D      a fourth embodiment of a TCS compartment;
Figure 3E      a fifth embodiment of a TCS compartment;
Figure 3F      a sixth embodiment of a TCS compartment;
Figure 4A      a diagram showing the temperature profile of the HTF during a chargingdischarging cycle of the embodiment of the TES system shown in Fig. 2A;
Figure 4B      a diagram showing the HTF outflow temperature of the TES system shown in Fig. 2A and a system comprising solely a SHS module during discharging;
Figure 4C      a diagram showing the HTF outflow temperature of the TES system shown in Fig. 2A and a system comprising solely a SHS module during charging;
Figure 5A      a diagram depicting the outflow temperature of a HTF during discharging;
Figure 5B      a diagram depicting the control of the steepness of thermocline;
Figure 5C      a diagram depicting the heating of an HTF involving a phase change;
Figure 6A      a schematic view of the HTF flow in a system of solar field, TES system and power block during charging; and
Figure 6B      a schematic view of the HTF flow in a system of solar field, TES system and power block during discharging.

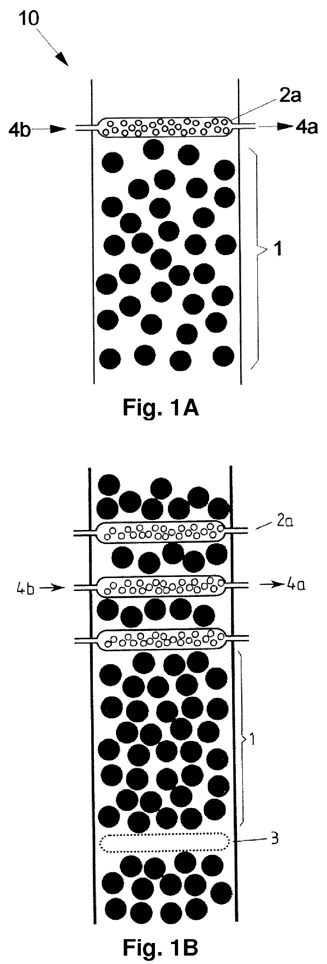

Figure 1A shows a schematic side view of a first embodiment of the present TES system 10. Here a SHS module 1 made of a packed bed of rocks is provided in an enclosure together with one TCS module 2 comprising a compartment 2a with TCS material. The compartment 2a is arranged on top of the rocks 1. When charging the hot HTF passes at first the TCS module 2 enabling an endothermic reaction of the TCS material therein and subsequently enters the SHS module 1 made of packed rocks and passes through the same whereby transferring heat to the packed rocks. When discharging the cold HTF passes first the SHS module 1 and then the TCS module 2.

Figure 1B shows a schematic side view of a second embodiment of the present TES system which is based on a combination of three TCS modules with five SHS modules 1 and one LHS module 3, here, in form of an encapsulated PCM. The TCS module 2a comprises one or more tubes that are filled with suitable materials participating in reversible homogeneous or heterogeneous chemical reactions, which are used for taking up the heat transferred from the HTF flowing through the system and in the reverse reaction releasing the heat which is subsequently transferred to the HTF in a discharging process. The HTF exchanges the heat with the SHS medium directly and with the TCS and encapsulated PCM indirectly through the walls of the respective compartments.

The partial pressure of any gaseous reactants within the TCS compartments is achieved by adjusting the total pressure using for instance a valve, a vacuum pump or a compression device or by diluting the reactants with an inert gas. The gas reactant (gas$_{in}$ 4b) required for the exothermic discharging reaction can be taken from the ambient, from one or more containers and/or from a plant, in which the TES system is integrated. In turn, the gas (gas$_{out}$ 4a) which is released during the endothermic charging process may be stored in one or more containers for later use, released to the ambient and/or supplied to the plant, into which the TES system is integrated.

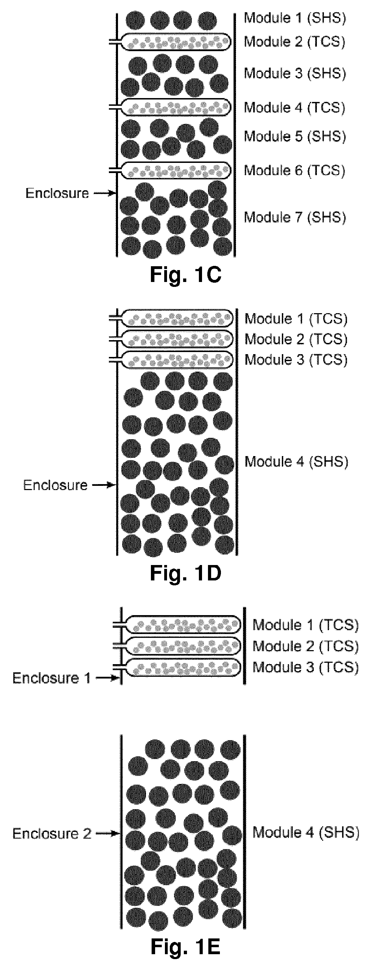

Fig. 1C shows a TES system comprised of a single enclosure. In fact, this arrangement could be regarded as tube bundles containing TCS materials that are immersed into a packed bed of SHS material. This system is an arrangement of alternating three TCS and four SHS modules.

Fig. 1D shows another embodiment of the present TES system comprising a single enclosure. This illustration corresponds to a tube bundle that is not immersed into the packed bed of SHS material. This system is an arrangement of three TCS modules and one SHS module.

Fig. 1E shows yet another embodiment of the present TES system comprising of two enclosures. Here the three TCS modules and the one SHS module are placed in separate enclosures.

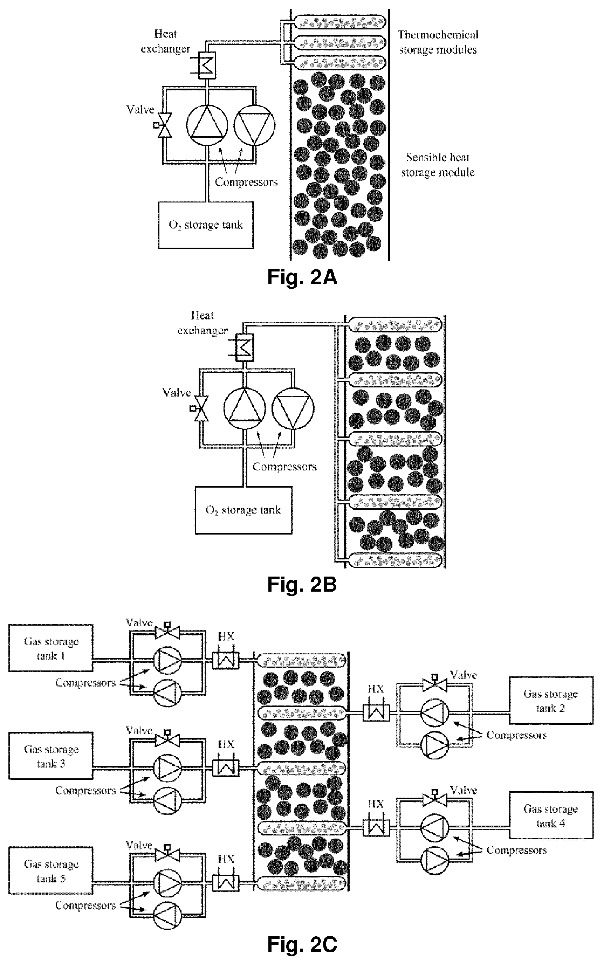

Figure 2A shows a further embodiment of the present system and method. Here, three TCS modules 2, each consisting of a tube bundle, are inserted at the hot end of the sensible heat regenerator that consists of a packed bed (Figure 2A). The TCS modules 2 cover the complete cross section of the enclosure so that a maximum heat transfer between HTF and TCS compartments 2 is guaranteed. To avoid feeding gas at high temperatures to the compressor, a heat exchanger may be inserted in between of those compressors and the TCS compartments. The recovered heat may be utilized in any other process of the plant, fed back to the TES system, stored in a separate TES system, or released to the ambient.

The TCS compartments 2 are filled with manganese oxide powder which is subjected to a pure oxygen atmosphere to run the manganese oxide redox cycle (6 Mn$_2$O$_3$ $\leftrightarrow$ 4 Mn$_3$O$_4$ + O$_2$). By reducing the oxygen pressure in the TCS compartments during charging (i.e., heat storage) to 0.01 bar using an external vacuum pump, the endothermic reduction can be performed at temperatures about 800 °C. The heat required for the endothermic reaction is provided by the HTF which enters the TES system at 900 °C. For the reversed process of heat release, the valve is opened to increase the oxygen pressure to about 1 bar and thereby the exothermic reaction can be performed at temperatures of above 900 °C what allows for an appropriate heat transfer to the HTF. In this way, an outflow temperature of 900 °C can be maintained during the entire discharging.

Fig. 2B is a schematic side view of another embodiment of the present TES system containing multiple TCS 2 and SHS modules 1. In this example, the pressure is equivalent within all the TCS modules. The individual TCS modules may be filled with the same solid reactants, or with different reactants that operate at different temperature ranges.

Fig 2C is a schematic side view of yet another embodiment of the present TES system that is similar to the one shown in Fig. 2C. However, in this case the pressure levels within the different TCS modules 2 are regulated individually. The individual TCS modules may be filled with the same reactants, or with different reactants that operate at different temperature ranges. Such a TES system offers a high flexibility for tuning the axial temperature profiles. Even if employing identical reactants within the different TCS modules, axial temperature gradients could be maintained by operating them at different pressure levels. The TCS modules at the cold and hot ends of the TES system could be used to control the HTF outflow temperatures during charging and discharging, respectively, whereas the TCS modules located in between can be used to increase the steepness of the thermocline and thus the energy storage density. The SHS material located in between of the TCS modules may still store the majority of the total stored heat, and thus lower the overall storage costs significantly.

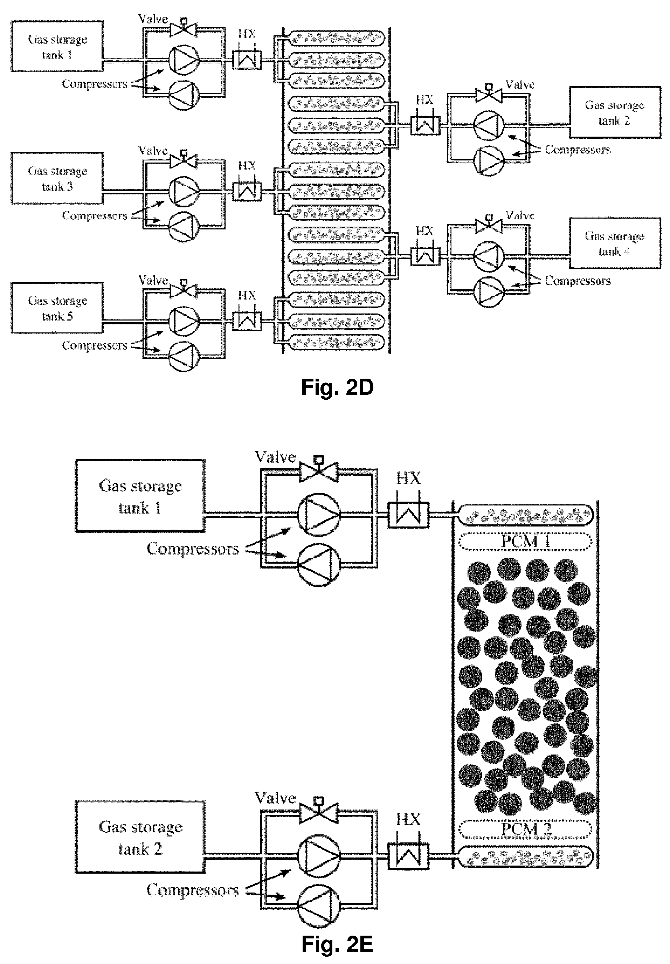

Fig. 2D is a schematic side view of another embodiment of the present TES system which reflects the case of using TCS modules exclusively. To maintain thermal gradients along the storage axis, the different TCS modules may be filled with different TCS materials and/or operated at individual pressure levels. Assuming that appropriate TCS materials are available, such a TES system offers maximum flexibility regarding the control of the axial temperature profiles, and potentially leads to very high energy storage densities.

Fig. 2E is a schematic side view of another embodiment of the present TES system comprising TCS, LHS, and SHS modules. The TCS modules at the cold and hot ends of the TES system could be used to control the HTF outflow temperatures during charging and discharging, respectively. The LHS modules (indicated by PCM 1 and PCM 2) would heat/cool the HTF to a fixed temperature given by the PCM solidification/melting temperatures before the HTF enters the TCS modules. This could reduce the heat transfer rates at which the TCS modules need to be operated, which could be important for slow reactions in particular. The SHS material in between could potentially store the majority of the total stored heat, thus reducing the overall costs of the TES system.

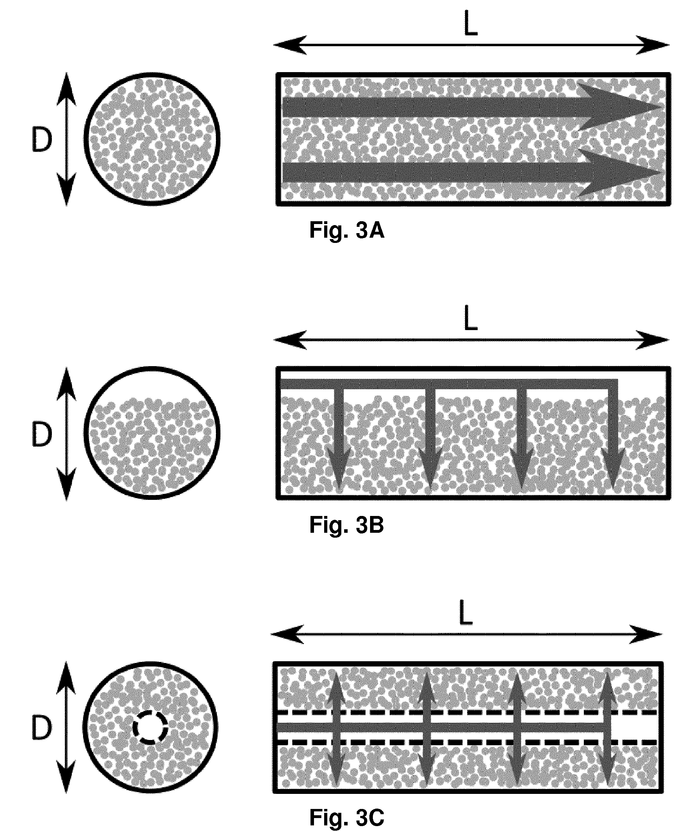

Fig. 3A depicts a first embodiment of a TCS compartment configuration, wherein a tube is completely filled with TCS material. Here the gas reactant needs to travel through the bed along the entire tube length L, leading to the maximum possible pressure drop. Gray arrows indicate the path for the gas reactants.

The second embodiment of a TCS compartment shown in Fig. 3B depicts a tube partially filled with TCS material. Here the travel distance of the gas reactant through the bed is reduced to about D. If L/D>>1, the pressure drop is significantly lower compared to a completely filled tube. Gray arrows indicate the path for the gas reactants.

Fig. 3C shows an annulus-type tube as a third embodiment of a TCS compartment. Here the TCS material is arranged within the annulus or mantle of the tube and the gas is transported in the center of the annular tube. The gas enters or leaves the TCS material through a gas permeable membrane, porous, or perforated center tube. The travel distance of the gas through the bed is reduced to the order of D.

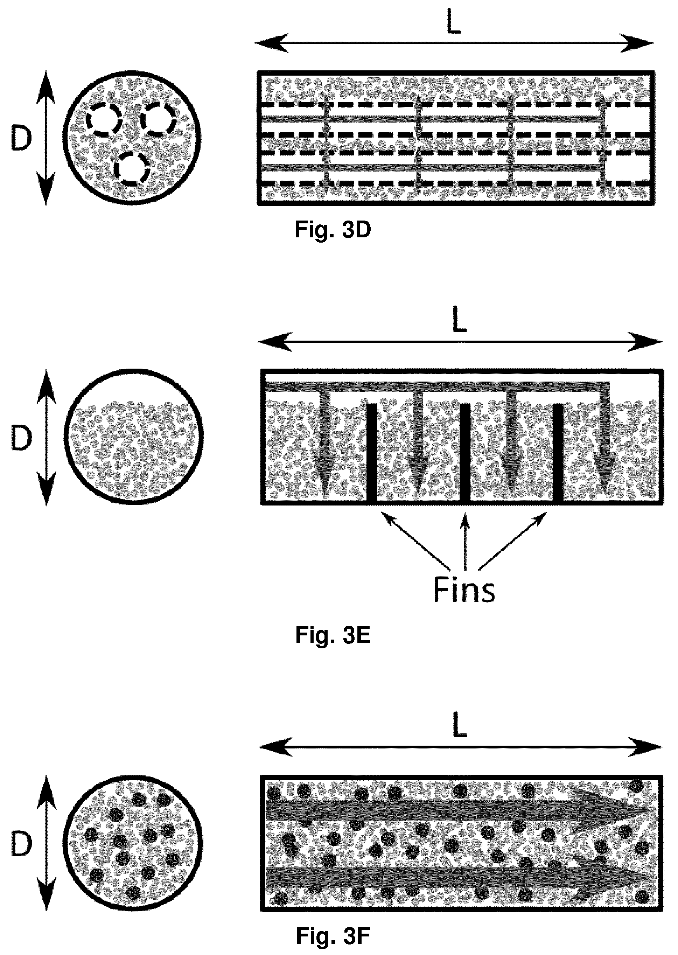

In Fig. 3D a further fourth embodiment of the TCS compartment is shown which is a variant of the compartment in Fig. 3C. Here more than one porous or perforated tubes are situated within a single TCS compartment filled with the TCS material.

Fig. 3E shows a tube with internals and/or baffles for heat transfer and/or gas-solid contacting enhancements as a fifth embodiment of the TCS compartment. The internals may include fins to enhance radial heat transfer from the TCS material to the tube walls and vice versa. This structure may also be applied to annulus-type tubes of Figs. 3C and 3D.

In Fig. 3F a sixth embodiment of the TCS compartment in the form of a tube filled with a mixture of TCS material and inert solids is shown. The use of inert solid material reduces the potential sintering of the TCS material, thus improving mass transfer to the TCS material. Mixing the TCS material with inert solids may also be applied to any of the TCS compartment configurations depicted in Figs. 3A-E.

The diagram of Fig. 5A depicts the stable HTF outflow temperature during discharging obtained by the present TES system as described earlier. As also described previously, the diagram of Fig. 5B depicts the steepness of the thermocline within the regenerator which has a direct impact on the storage density. The present system allows for tuning the steepness of the thermocline.

The diagram shown in Fig. 5C shows the axial temperature profiles during heating an HTF involving a phase change. During a potential phase change of the HTF (such as for steam generation), its temperature remains basically constant. Therefore, it can be beneficial in terms of exergy efficiency to provide a section within the TES system where heat is released at constant temperature. In that case, the temperature difference between the evaporating HTF and the storage material can be kept constant along the storage axis. The present system allows to provide appropriate axial temperature profiles by combining, for example, a SHS module for water preheating, an isothermal section comprised of one or multiple TCS and LHS modules for evaporation, and another SHS and/or TCS module for superheating the steam. In particular, by employing a TCS module for superheating, the outflow temperature of the superheated steam could be kept constant during the entire discharging.

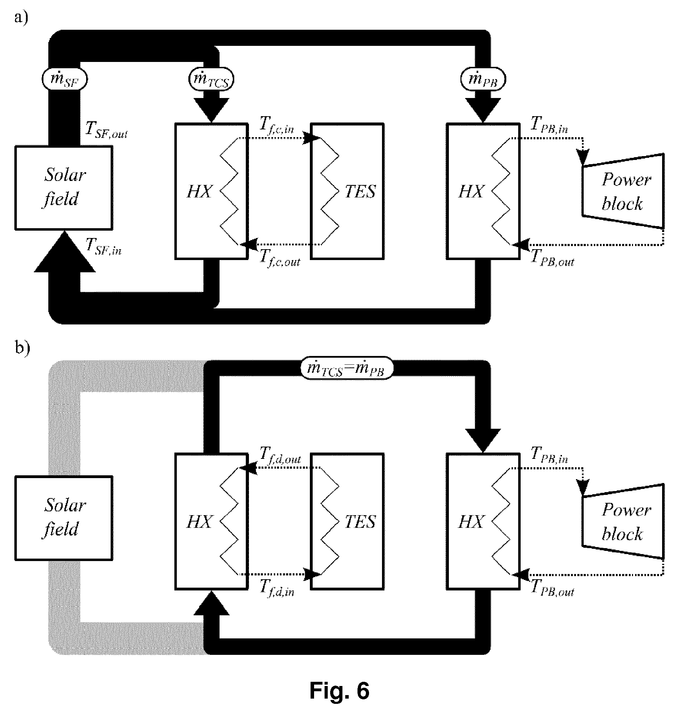

In Fig. 6A, B a schematic view of the HTF flow in a CSP plant comprising a solar field, TES system and power block during charging and discharging, respectively, is shown. Here three subsystems (solar field, TES system, and power block) are operated with individual HTFs that are coupled through heat exchangers (HX). It can be seen that during charging the HTF enters the TES system at the outlet temperature of the solar field ($T_{SF,out}$), and during discharging it enters the TES system at the outlet temperature of the power block ($T_{PB,out}$). Furthermore, the direction of the arrows indicates the change in the HTF flow direction between the charging and discharging processes. Thus, the upper and lower ends of the TES system can be kept at high and low temperatures, respectively, during the entire process.

Example:

In the following preliminary simulation results of a combined SHS-TCS system and of a SHS alone are compared. For the combined SHS-TCS system, two cases are demonstrated: a) the HTF outflow temperature during discharging is controlled to remain equal to the HTF inflow temperature during charging ($T_{f,d,out} = T_{f,c,in}$), and b) the HTF outflow temperature during charging is controlled to be 10 $K$ higher than the HTF inflow temperature during charging ($T_{f,d,out} = T_{f,c,in}$ + 10 $K$).

The enclosures of both TES systems are cylindrical with a cross-sectional area of 1 $m^2$, have a total height of 4 $m$, and are assumed to be adiabatic, i.e., wall heat losses are neglected. The combined TES system is composed of one SHS module and 30 TCS modules (i.e., 30 rows of metal tubes) that are all placed in a single enclosure, see Fig. 2A. The TCS modules are located at the hot end of the TES system. The sensible-only storage is composed of a single SHS module. The SHS module is comprised of a packed bed of rocks, which are assumed to be of spherical shape with a uniform diameter of 32 mm. Each TCS module is comprised of one row of tubes of circular cross section that covers the entire cross section of the enclosure. The outer and inner diameters of a single tube are 16 $mm$ and 12 $mm$, respectively. The vertical and horizontal displacement between two adjacent tubes is 25 $mm$ . Each tube is filled with manganese oxide powder, assuming a void fraction of 50 %. All the 30 tube rows are interconnected, such that the oxygen pressure is equivalent within all of them at any time.

The redox reaction employed in the TCS modules is 6 $Mn_2O_3 \leftrightarrow 4 Mn_3O_4 + O_2$.

The employed conversion rate is

$$\frac{dX_s}{dt} = k_0 \exp\left(\frac{-E_A}{RT}\right) X_s^{a} \left(1 - X_s\right)^{b} \left(\left|1 - \frac{p_{O_2}}{p_{O_2,eq}}\right|\right)^{s}$$

The employed coefficients are given in Table 1 for both oxidation and reduction kinetics. This empirical model is based on experimental data.

The equilibrium pressure is calculated with

$$\ln\left(p_{O_2,eq}\right) = \frac{-21650}{T} + 29.744 \,,$$

which has been obtained from the software HSC Chemistry. Air is employed as HTF with a fixed outlet pressure of 1 bar. The TESs are both charged during 6 $h$ by feeding the hot HTF with a temperature of 1173 K from the top, and subsequently discharged during another 6 $h$ by feeding the cold HTF with a temperature of 573 K from the bottom. For the SHS, as well as the combined SHS-TCS with a target discharging temperature of $T_{f,d,out} = T_{f,c,in}$, the HTF mass flows during charging and discharging are 0.05 $kg/s$ and 0.0476 $kg/s$, respectively. For the combined SHS-TCS with a target discharging temperature of $T_{f,d,out} = T_{f,c,in} + 10$ K , the HTF mass flows during charging and discharging are set to 0.05 $kg/s$ and 0.0456 $kg/s$, respectively. Note that the TES systems are operated at quasi-steady state conditions, i.e., the conditions at the end of discharging ($t = 12$ $h$) are equivalent to the conditions at the beginning of charging ($t = 0$ $h$). The lower and upper pressure limits in the TCS compartments are set to $10^3$ $Pa$ and $10^6$ $Pa$, respectively.

Table 1

|  | Oxidation | Reduction |
|---|---|---|
| $k_0$ | -2.8089×$10^{12}$ $s^{-1}$ | 8.2167×$10^{9}$ $s^{-1}$ |
| $E_A$ | 2.9970×$10^5$ $J/mol$ | 2.5040×$10^5$ $J/mol$ |
| $a$ | 1.0245 | 0.45633 |
| $b$ | 0.64231 | 1.4584 |
| $s$ | 1.3676 | 20.0 |

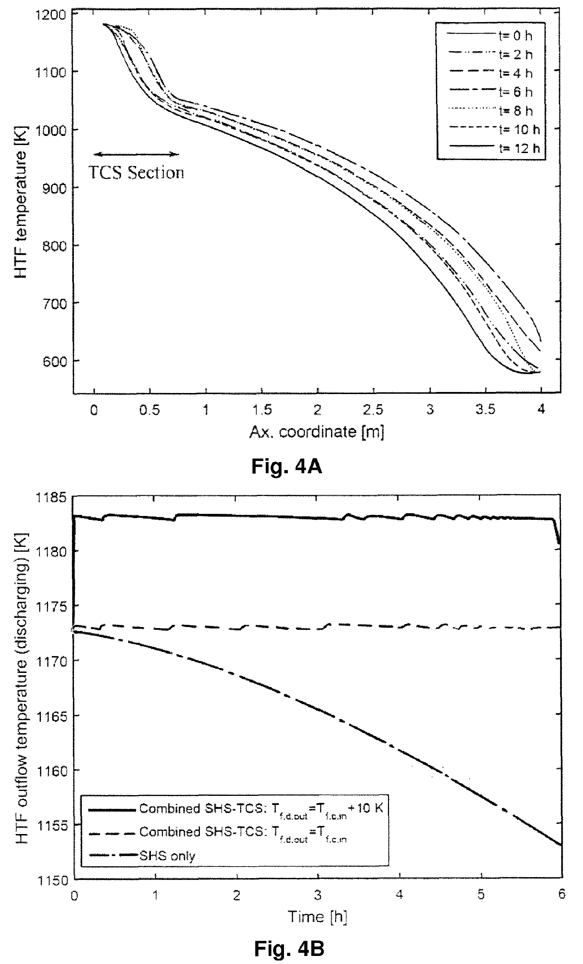

Figure 4A shows the axial temperature profiles of the HTF during an entire charging-discharging cycle in the combined SHS-TCS system with a target discharging temperature of $T_{f,d,out} = T_{f,c,in}$. It can be seen from Fig. 4A that the HTF temperature is stabilized near the hot end of the TES system, i.e., at $z = 0$ $m$. During charging, the oxygen pressure is reduced to the minimum pressure limit to shift the equilibrium to low temperatures, such that the endothermic reduction acts as a heat sink to the HTF. Accordingly, heat is transferred from the HTF to the tubes. At $t = 6$ $h$, discharging is initiated. The oxygen pressure within the tubes is now being adjusted at each time step to ensure an HTF outflow temperature remaining within 1173 ± 0.25 $K$. Before the outflow temperature would exceed this range, the oxygen pressure is reduced, and vice-versa.

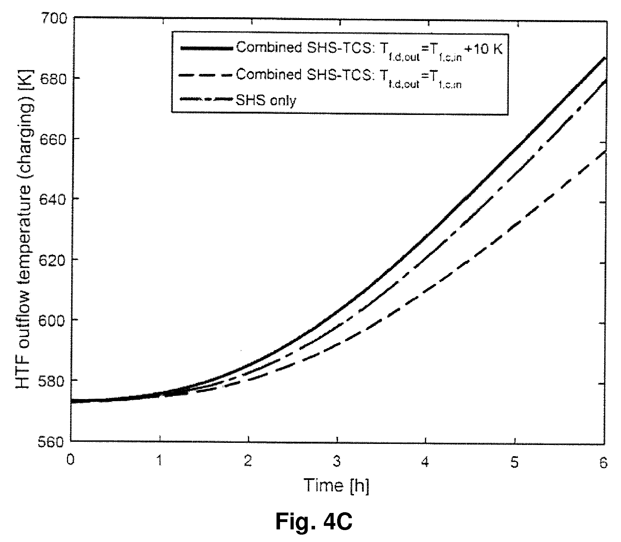

The resulting HTF outflow temperatures during discharging and charging are shown in Figs. 4B and 4C, respectively, for both the combined SHS-TCS system (as shown in Fig. 2A) and a TES system with rocks only. Figure 4B demonstrates the ability of the combined SHS-TCS to stabilize the HTF outflow temperature during discharging within a desired temperature range, which may be even higher than the HTF inflow temperature during charging. Conversely, the HTF outflow temperature experiences a continuous drop if employing only SHS medium. Furthermore, it can be seen from Fig. 4C that if targeting an HTF outflow temperature of $T_{f,d,out} = T_{f,c,in}$ during discharging, the HTF outflow temperature during charging remains lower in the combined storage than in the SHS. This implies that more heat is stored in the combined than in the SHS during a charging period, which indicates a higher energy storage density in the combined storage. However, increasing the target HTF outflow temperature during discharging, in this case to $T_{f,d,out} = T_{f,c,in} + 10$ $K$, comes at the expense of increased HTF outflow temperatures during charging.

**Claims**

**1.** A thermal storage system (10), comprising

- at least two heat storage modules (1, 2, 3),
- wherein at least one of the heat storage modules is at least one thermochemical storage module (2), which is spatially separated from the at least one further heat storage module (1, 2, 3),
- wherein the at least two heat storage modules (1,2, 3) are provided in series such that each heat storage module (1, 2, 3) is passed by at least one heat transfer fluid .

2. Thermal storage system according to claim 1, **characterized in that** the at least two heat storage modules (1, 2, 3) are provided in one enclosure, in particular in one container.

3. Thermal storage system according to claim 2, **characterized in that** the at least one thermochemical storage module (2) is arranged at any position along the axial direction of the one enclosure.

4. Thermal storage system according to claim 1, **characterized in that** each of the at least two heat storage modules (1, 2, 3) are provided in at least two separate enclosures.

5. Thermal storage system according to one of the preceding claims, **characterized in that** the at least one thermochemical storage module (2) comprises at least one compartment (2a) containing at least one thermochemical storage material.

6. Thermal storage system according to claim 5, **characterized in that** the at least one compartment (2a) containing at least one thermochemical storage material is constructed as at least one tube bundle.

7. Thermal storage system according to claim 5, **characterized in that** the at least one compartment (2a) containing at least one thermochemical storage material is designed as an annulus type system of one outer tube having gas-impermeable wall and at least one inner tube having either the common or a parallel axis with the outer tube

- wherein the inner tube walls are gas permeable,
- whereby at least a portion of at least one inner tube is free of the TCS material and used to deliver/evacuate the gaseous reactant(s)/product(s) to the TCS material.

8. Thermal storage system according to one of the preceding claims, **characterized in that** in case there are only thermochemical storage modules (2) provided each module comprises a different type of thermochemical storage material and/or operates at different gas pressures.

9. Thermal storage system according to one of the preceding claims, **characterized in that**, the pressure in the at least one thermochemical storage module (2), preferably multiple thermochemical storage modules (2) containing at least one thermochemical storage material is independently controlled.

10. Thermal storage system according to one of the preceding claims, **characterized in that** the at least one other heat storage module is at least one sensible heat storage module (1), at least one thermochemical storage module (2) and/or at least one latent heat storage module (3).

11. Thermal storage system according to one of the preceding claims, 10, **characterized in that** the at least other heat storage module (1) is at least one sensible heat storage module (1) comprising at least one sensible heat storage material is a packed bed system of solids, preferably comprising rocks.

12. Thermal storage system according to one of the preceding claims, **characterized in that** the at least one other heat storage module (3) is at least one latent heat storage module (3) comprising at least one compartment containing phase change material.

13. Method for storing heat using a thermal storage system according to one of the previous claims comprising the steps of

- guiding a flow of at least one heat transfer fluid with a defined inflow temperature $T_{HTF/in}$ (charge) through the thermal storage system, wherein the heat transfer fluid passes the at least two heat storage modules (1, 2, 3), wherein at least one of the heat storage modules is at least one thermochemical storage module (2), which is spatially separated from the at least one further heat storage module (1, 2, 3),
- whereby heat transfer fluid transfers at least part of its heat to the at least two heat storage modules (1,2,3), and
- the heat transfer fluid leaves the thermal storage system with an outflow temperature $T_{HTF/out}$ (charge) that is lower than the inflow temperature $T_{HTF/in\ (charge)}$.

14. Method according to claim 13, **characterized in that** the heat transfer fluid transfers at least a part of its heat to the thermochemical storage module (2) comprising the thermochemical storage material, whereby the thermochemical storage material undergoes an endothermic-exothermic reversible chemical reaction.

15. Method according to claim 14, **characterized in that** the endothermic reversible chemical reaction of the thermochemical storage material in the compartment (2a) provides at least one $gas_{out}$ (4a), which is subsequently at least partially removed from the compartment (2a).

16. Method for releasing heat stored in a thermal storage system according to one of the claims 1 to 12 comprising the steps of

- guiding a flow of at least one heat transfer fluid with an inflow temperature $T_{HTF/in}$ (discharge) through the thermal storage system, wherein the heat transfer fluid passes the at least two heat storage modules (1, 2, 3), wherein at least one of the heat storage modules is at least one thermochemical storage module (2), which is spatially separated from the at least one further heat storage module (1, 2, 3),
- whereby at least part of the heat stored in the at least two heat storage modules (1, 2, 3) is transferred to the heat transfer fluid , and
- whereby the heat transfer fluid leaves the thermal storage system with an outflow temperature $T_{HTF/out}$ (discharge) that is higher than the inflow temperature $T_{HTF/in\ (discharge)}$.

17. Method according to claim 16, **characterized in that** the thermochemical storage material in the at least one thermochemical storage module (2) undergoes an exothermic reversible chemical reaction, whereby at least part of the heat released during said exothermic reaction is transferred to heat transfer fluid.

18. Method according to claim 17, **characterized in that** the exothermic reversible chemical reaction of the thermochemical storage material is controlled by adjusting the partial pressure of at least one $gas_{in}$ (4b) in the at least one thermochemical storage module (2).

Fig. 1A

Fig. 1B

Module 1 (SHS)
Module 2 (TCS)
Module 3 (SHS)
Module 4 (TCS)
Module 5 (SHS)
Module 6 (TCS)

Enclosure →

Module 7 (SHS)

Fig. 1C

Module 1 (TCS)
Module 2 (TCS)
Module 3 (TCS)

Enclosure →

Module 4 (SHS)

Fig. 1D

Module 1 (TCS)
Module 2 (TCS)
Module 3 (TCS)
Enclosure 1 →

Enclosure 2 →

Module 4 (SHS)

Fig. 1E

17

**Fig. 2A**

**Fig. 2B**

**Fig. 2C**

Fig. 2D

Fig. 2E

Fig. 3A

Fig. 3B

Fig. 3C

Fig. 3D

Fins

Fig. 3E

Fig. 3F

**Fig. 4A**

**Fig. 4B**

Fig. 4C

a) Heating an HTF to a constant outflow temperature

Fig. 5A

b) Controlling steepness of thermocline

Fig. 5B

c) Heating an HTF involving a phase change

Fig. 5C

a)

b)

**Fig. 6**

Europäisches
Patentamt

European
Patent Office

Office européen
des brevets

# EUROPEAN SEARCH REPORT

Application Number

EP 15 17 7878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 007822 A (DENSO CORP) 12 January 2012 (2012-01-12) * abstract; figure 2 * ----- | 1-18 | INV. F28D20/00 F28D20/02 |
| X | US 2004/211407 A1 (TERASHIMA TETSUO [JP] ET AL) 28 October 2004 (2004-10-28) * paragraph [0250] - paragraph [0251]; figures 12,13 * ----- | 1,13-16 | |
| A | ES 2 480 765 A1 (UNI POLITÈCNICA DE CATALUNYA [ES]) 28 July 2014 (2014-07-28) * figures 1,2 * ----- | 1-18 | |
| | | | TECHNICAL FIELDS SEARCHED (IPC) |
| | | | F28D |

The present search report has been drawn up for all claims

| Place of search | Date of completion of the search | Examiner |
|---|---|---|
| Munich | 23 June 2016 | Martínez Rico, Celia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 17 7878

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2016

| Patent document cited in search report | | Publication date | Patent family member(s) | | Publication date |
|---|---|---|---|---|---|
| JP 2012007822 | A | 12-01-2012 | JP | 5397327 B2 | 22-01-2014 |
| | | | JP | 2012007822 A | 12-01-2012 |
| US 2004211407 | A1 | 28-10-2004 | EP | 1471324 A2 | 27-10-2004 |
| | | | US | 2004211407 A1 | 28-10-2004 |
| ES 2480765 | A1 | 28-07-2014 | CN | 105008840 A | 28-10-2015 |
| | | | EP | 2942591 A1 | 11-11-2015 |
| | | | ES | 2480765 A1 | 28-07-2014 |
| | | | WO | 2014102418 A1 | 03-07-2014 |

EPO FORM P0459

For more details about this annex : see Official Journal of the European Patent Office, No. 12/82

**EP 3 121 547 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 20110546 A1

### Non-patent literature cited in the description

- **KURAVI et al.** *Progress in Energy and Combustion Science,* 2013, vol. 49, 285-329
- **COT-GORES et al.** *Renewable and Sustainable Energy Reviews,* 2012, vol. 16, 5207-5224
- **ZANGANEH et al.** *Applied Thermal Engineering,* 2014, vol. 70 (1), 316-320
- **SCHAUBE et al.** *Journal of Solar Energy Engineering,* 2011, vol. 133, 031006
- **ÁLVAREZ et al.** *Energy Procedia,* 2014, vol. 49, 676-683
- **ERGUN, S.** *Chemical Engineering Progress,* 1952, vol. 48 (2), 98-94